# EUROPEAN PATENT APPLICATION

(11) **EP 2 608 524 A1**
(43) Date of publication of application: **26.06.2013**
(21) Application number: 11195223.0
(22) Date of filing: 22.12.2011
(51) Int. Cl.: H04N 5/232, H04N 101/00

(54) **Method and apparatus for controlling camera functions using facial recognition and eye tracking**

(30) Priority: 20.12.2011 US 201113331471
(71) Applicant: Research In Motion Limited, Waterloo, ON N2L 3W8 (CA)
(72) Inventor: Hill, Samuel, Lafayette IN Indiana 47909 (US); Hill, Thomas Casey, Crystal Lake IL Illinois 60014 (US)
(74) Representative: Fennell, Gareth Charles

(57) **Abstract**

A device (100) is provided. The device includes a primary camera (310) to capture images, a secondary camera (320) to capture images, a viewfinder (130), and a processor (360). The viewfinder can display images captured by the primary camera. The processor can provide eye tracking analysis on images captured by the secondary camera in order to determine a region of interest in the viewfinder. The processor further associates the region of interest with a portion of an image captured by the primary camera. The processor further initiates an autofocus procedure based on the region of interest.

## Description

### BACKGROUND

Many digital cameras have two viewfinder systems for viewing images that might be captured in a photograph. An optical viewfinder is a window through which a photographer can see a distant image via a system of mirrors or prisms. With an electronic viewfinder, an image is captured by an electronic sensor and then displayed on a screen that is typically located on the back,of the camera. The screen is typically a liquid crystal diode (LCD)-based display screen, and hereinafter an electronic viewfinder may be referred to as an LCD screen for simplicity and clarity, but it should be understood that electronic viewfinders are not necessarily LCD screens. An LCD screen can cover a large portion of the back of a camera, and therefore a photographer may be able to view an image in an LCD screen from a considerable distance. An optical viewfinder, on the other hand, is typically quite small compared to an LCD screen, and the photographer's eye typically needs to be placed close to an optical viewfinder in order to see an image in the optical viewfinder.

Creating a quality photograph typically requires that the camera properly focus on the subject of the photograph. Some cameras offer the photographer little or no control over the focus of the camera and instead rely on an autofocus system to choose and focus on a subject. That is, on cameras with an autofocus system, the photographer typically takes only a simple action that causes the camera to automatically focus on a particular portion of a scene that the camera is pointed toward.

For example, for cameras with mechanical shutter buttons, the mechanical shutter button might be partially depressed to activate the autofocus system. This typically causes the autofocus system to focus on an object near the center of the viewing frame. The mechanical shutter button might then be fully depressed to cause the camera to take a photograph. An object selected by the autofocus system as the subject of the photograph will be in focus and other objects in the scene may not be in focus.

Other cameras may have virtual shutter buttons depicted on a touch screen rather than mechanical shutter buttons. That is, an image of a shutter button might appear on the touch screen, and contact with the shutter button image might cause the camera to take a photograph. For such cameras, the virtual shutter button might be activated in one of two ways in order to take a photograph. In one mode, a quick tap of the shutter button causes a photograph to be taken. In the other mode, contact with the shutter button can be made and held, and a photograph is taken when the shutter button is released. In either mode, the autofocus system might be activated when contact with the virtual shutter button is initially made, and the capture of the photograph might occur at the moment the photographer removes contact from the virtual shutter button.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 illustrates a camera, according to an implementation of the disclosure.

Figures 2a and 2b illustrate a smart phone, according to an implementation of the disclosure.

Figure 3 illustrates components in a device, according to an implementation of the disclosure.

Figure 4 illustrates images in an electronic viewfinder on a device, according to an implementation of the disclosure.

Figure 5 is a flowchart for a method for focusing a primary camera on a device, according to an implementation of the disclosure.

Figure 6 illustrates a device suitable for implementing the several aspects of the present disclosure.

### DETAILED DESCRIPTION

It should be understood at the outset that although illustrative implementations of one or more aspects of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Autofocus systems tend to select either an object in the center of the viewfinder or the most dominant object in the viewfinder as the object that is to be focused on. This can sometimes lead to an unwanted object being focused on. For example, a photographer might wish to frame a photograph with a person on the left side of the frame and a more predominant object (such as a monument) in the center of the frame and behind the person. The photographer might also wish to have the person appear in focus and have the monument appear out of focus. A typical autofocus system might choose to focus the camera on the monument due to its large and central status. This could cause the image of the person to be out of focus, against the wishes of the photographer regarding the focus of the photograph. The photographer could make the autofocus system focus on the person by placing the person in the center of the frame, but this would be against the wishes of the photographer regarding the composition of the photograph.

Implementations of the present disclosure provide control over the object that is to be focused on in cameras and other devices with an autofocus system. As used herein, the term "device" can refer to any apparatus capable of taking photographs, regardless of whether the apparatus is a stand-alone camera or a multi-function device with photography capabilities, such as a smart phone, a tablet computer, or a similar apparatus.

In an implementation, a device is equipped with a primary camera and a secondary camera. The primary camera includes an autofocus system and can be used for capturing photographs in the manner well known to those of skill in the art. The secondary camera can operate in conjunction with an eye tracking component to track a photographer's eye movement across an LCD screen on the device. Eye movement information generated by the secondary camera is provided to the primary camera and informs the primary camera of the region within the LCD screen toward which the photographer's gaze is directed. The primary camera can then automatically focus on a real object virtually displayed in the portion of the LCD screen that the photographer is looking at. That is, an autofocus procedure is performed on only a portion of a scene displayed in the LCD screen rather than on the entire scene.

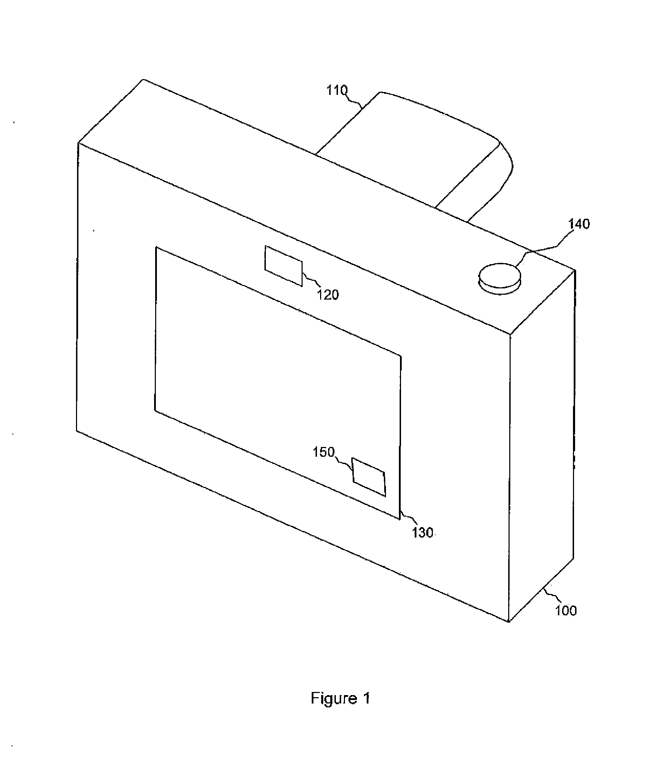

Figure 1 illustrates an implementation of a device 100 capable of functioning in this manner. The device 100 includes a first lens 110 associated with the primary camera and a second lens 120 associated with the secondary camera. The device 100 also includes an LCD screen 130 capable of displaying images captured by the primary camera. The device 100 might include a mechanical shutter button 140 or might have a virtual shutter button located on the LCD screen 130. The device 100 might also include other components not shown, such as control buttons or other well known input mechanisms.

While the second lens 120 is depicted above and near a vertical line through the center of the LCD screen 130, the second lens 120 could be positioned in other locations. In general, the second lens 120 and the LCD screen 130 may be situated on the device 100 in such a manner that the focal plane of an image captured by the secondary camera is generally parallel to the focal plane of an image captured by the primary camera and displayed in the LCD screen 130.

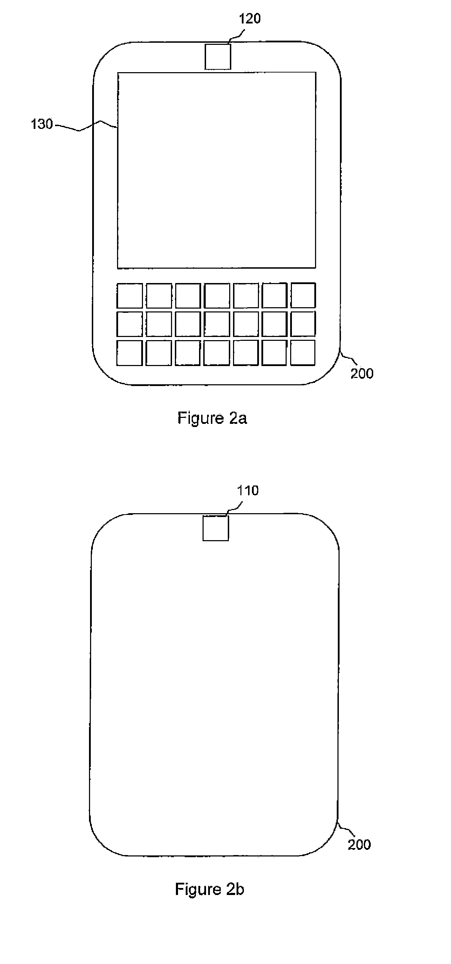

The device 100 is depicted in Figure 1 as a stand-alone camera, but it should be understood that the device 100 might be a multi-function device with photography capabilities, such as a smart phone, a tablet computer, or a similar device. Figures 2a and 2b depict front and rear views, respectively, of a smart phone 200 that might have components and capabilities similar to those of the device 100.

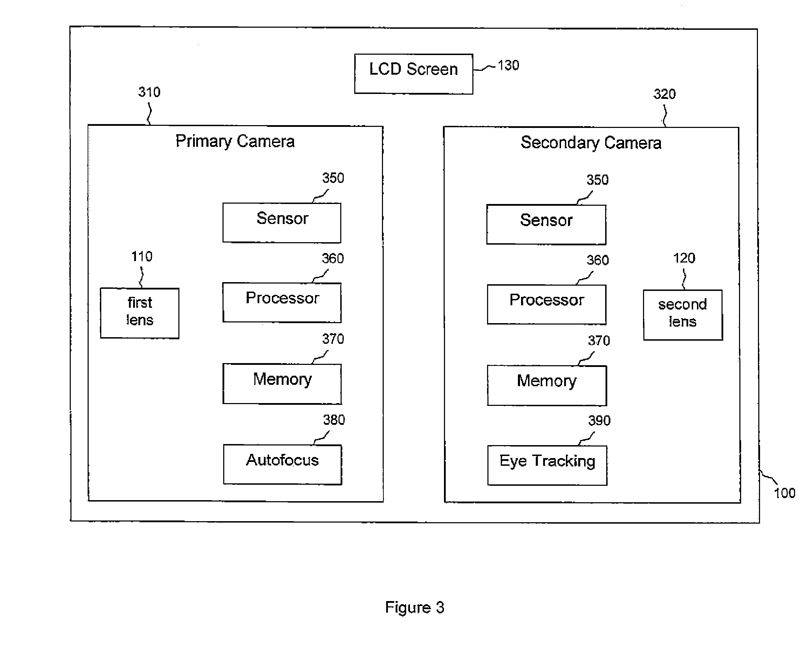

Figure 3 is a simplified block diagram of components that might be present in the device 100. The device 100 includes the LCD screen 130, a primary camera 310, and a secondary camera 320. As mentioned above, the primary camera 310 can capture photographic images in the manner well known to those of skill in the art. As will be described in more detail below, the secondary camera 320 and its associated hardware and software can track the movements of the eyes of a person looking at the LCD screen 130. The primary camera 310 and secondary camera 320 are not necessarily discrete components as shown, but could be any combination of hardware, firmware, software, and mechanical components capable of capturing photographic images.

More specifically, the primary camera 310 and secondary camera 320 can include the lenses 110 and 120, respectively, a sensor system 350, a processing system 360, memory 370, and other components that can function in the manner well known to those of skill in the art to enable the capture of photographic images by digital cameras. As used herein, the term "photographic image" or simply "image" can refer to an electronic signal produced by one of the sensors 350 upon receiving an optical image from one of the lenses 110 or 120. Phrases such as "capturing an image" can refer to the process by which one of the sensors 350 converts an optical image to an electronic signal. Phrases such as "focusing on an image" can refer to the process by which a portion of a captured image is manipulated such that a corresponding portion of the associated optical image is in focus. When the display on the LCD screen 130 is being discussed herein, the terms "displayed image" and the like can refer to a representation on the LCD screen 130 that corresponds to a captured image or a portion of a captured image.

While separate sensors 350, processors 360, and memory 370 are depicted for the primary camera 310 and the secondary camera 320, the functions of one or more of these components could be combined in single entity. For example, the primary camera 310 and secondary camera 320 might have separate sensors 350 as shown, but a single processor 360 and a single memory 370 located elsewhere on the device 100 might provide their respective functionalities to both the primary camera 310 and the secondary camera 320. Such a single processor 360 and single memory 370 might provide other functions on the device 100 that are not related to photography, such as mobile telecommunications functions. Also, the processor 360 may be capable of performing at least a portion of the autofocus and eye tracking functions described below. Hereinafter, the terms "processor" and "memory" might refer to separate processors and memory dedicated to each of the primary camera 310 and the secondary camera 320 or might refer to a single processor and single memory shared by both the primary camera 310 and the secondary camera 320. One of skill in the art might recognize other ways in which the functions of one of the components in Figure 3 might be shared by one or more of the other components or ways in which the functions of multiple components could be combined into a single component. Further, while only one sensor 350 is shown for each camera, multiple sensors might be present and, as such, the sensor 350 might include an array of sensors.

The primary camera 310 includes an autofocus system 380. The autofocus system 380 can automatically focus the primary camera 310 in the manner well known to those of skill in the art, but this focusing functionality can be modified in accordance with the implementations described herein. The autofocus system 380 is shown as a discrete component within the primary camera 310 and may be referred to hereinafter as a discrete component. However, it should be understood that the autofocus system 380 could be embodied in the processor 360 and memory 370 within the primary camera 310 or in a processor and memory located elsewhere in the device 100.

The secondary camera 320 includes an eye tracking system 390. As will be described in more detail below, the eye tracking system 390 can operate in conjunction with the secondary camera 320 to recognize human faces and track the movements of the eyes of a person looking at the LCD screen 130. The eye tracking system 390 is shown as a discrete component within the secondary camera 320 and may be referred to hereinafter as a discrete component. However, it should be understood that the eye tracking system 390 could be embodied in the processor 360 and memory 370 within the secondary camera 320 or in a processor and memory located elsewhere in the device 100.

In an implementation, the secondary camera 320 provides facial recognition and eye tracking capabilities that determine which portion of the LCD screen 130 a photographer is looking at. That is, the secondary camera 320, in association with the eye tracking system 390, and using facial recognition and eye tracking techniques, can recognize when a human face is in the field of view of the secondary camera 320, can recognize movement in the eyes in that face, and by tracking this movement can determine where the gaze of the eyes is directed. The device 100 might include accelerometers, gyroscopes, magnetometers, or other components that allow the device 100 to determine its orientation in space. The device 100 might also include a range-finding component that can determine the distance of the device 100 from the photographer's face. The range-finding component and/or the orientation-determination components might also be able to determine the device's physical disposition in space with respect to the photographer's face. These capabilities allow the secondary camera 320 to determine whether or not a photographer is looking at the LCD screen 130 and where on the LCD screen 130 the photographer is looking. The portion of the LCD screen 130 that the photographer is looking at can be referred to as the region of interest.

The secondary camera 320 can provide information regarding the region of interest to the primary camera 310. The autofocus system 380 associated with the primary camera 310 can then use this information to focus on a portion of an image captured by the primary camera 310 that is associated with the region of interest. That is, rather than an autofocus procedure being performed on an entire image captured by the primary camera 310, as is traditionally the case, an autofocus procedure is performed on the portion of the image associated with the region of interest. In this way, as a photographer's gaze passes over an image displayed in the LCD screen 130, the primary camera 310 performs its automatic focusing operation on the portion of the captured image associated with the portion of the displayed image the photographer is currently looking at. If the photographer then captures a photograph, the photograph will be focused on a real object virtually displayed in the portion of the LCD screen 130 the photographer was looking at, at the time the photograph was captured.

Continuing the above example, the photographer may wish to focus on a person whose image is displayed in the left foreground of the LCD screen 130 rather than focusing on a monument whose image is displayed in the center background of the LCD screen 130. To do so, the photographer could simply look toward the displayed image of the person in the LCD screen 130. The secondary camera 320 would then recognize, via the subsystems of the secondary camera 320, that the photographer is looking at the portion of the LCD screen 130 that includes the displayed image of the person rather than at the portion of the LCD screen 130 that includes the displayed image of the monument. The secondary camera 320 could pass information about this region of interest to the primary camera 310. The autofocus system 380 associated with the primary camera 310 could then perform its automatic focusing procedure on the portion of the image corresponding to the region of interest rather than on the entire image as displayed on the entire LCD screen 130. In this way, an object whose image is displayed in the region of interest will be in focus, and other objects whose images are displayed on the LCD screen 130 may or may not be in focus.

In an implementation, while a photographer is framing a photograph in the LCD screen 130, the photographer is provided with visual feedback that indicates the portion of the LCD screen 130 that the photographer is currently looking at. That is, the feedback indicates the region of interest and thus represents what the autofocus system 380 will focus on. This visual indication could be in the form of a focus frame that outlines or otherwise highlights the region of interest. The focus frame could move across the LCD screen 130 in tandem with the movement of the photographer's gaze across the LCD screen 130.

The functionality to generate the visual indication may be provided by the processor 360, possibly using instructions stored in the memory 370. For example, upon receiving eye tracking information from the secondary camera 320 and its eye tracking system 390 specifying the position of the photographer's gaze, the processor 360 might overlay visual feedback that indicates the position of the photographer's gaze on an image generated by the primary camera 310. The processor 360 might then send the image with the overlaid visual feedback to the LCD screen 130 for display on the LCD screen 130.

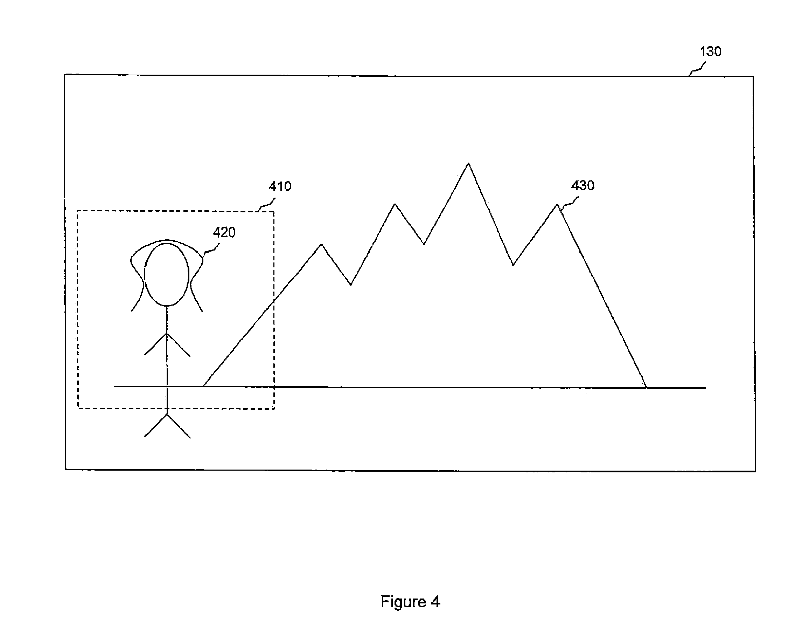

Such a visual indication is illustrated in Figure 4, where the LCD screen 130 is depicted without the rest of the device 100. A dashed square 410 indicates the region of interest in the LCD screen 130, and this portion of the LCD screen 130 represents a portion of a captured image on which automatic focusing will be performed. That is, rather than the autofocus system 380 performing automatic focus over the entire captured image represented by the entire LCD screen 130 as is traditionally the case, the autofocus system 380 instead performs automatic focus on the portion of the captured image represented by the portion of the LCD screen 130 outlined by the focus frame 410. A physical object whose image is displayed within the focus frame 410 will appear to be in focus, and any other objects that happen to be at approximately the same distance from the device 100 as that physical object and whose images appear anywhere in the LCD screen 130 will also appear to be in focus. Objects at other distances from the device 100 may not appear to be in focus. In an implementation, the size and/or shape of the focus frame 410 may be fixed or may be manually adjustable by the photographer.

In the example of Figure 4, the focus frame 410 indicates that the gaze of the photographer is directed toward the left side of the LCD screen 130, where a displayed image 420 of a person is present. Therefore, the automatic focusing procedure will be performed on the portion of the captured image represented by focus frame 410. Since the displayed image 420 of the person is the predominant displayed image within the focus frame 410, the actual person represented by the displayed image 420 might be the object on which the autofocus system 380 focuses. A traditional autofocus system might focus on an object represented by a displayed image 430 since the displayed image 430 is larger than the displayed image 420 and more central to the LCD screen 130. The autofocus system 380, however, would not cause the primary camera 310 to focus on that object, because the displayed image 430 is mostly outside the focus frame 410.

As the photographer's gaze is directed to different portions of the LCD screen 130, the focus frame 410 can move to follow the gaze across the LCD screen 130. When the photographer's gaze stops at a region within the LCD screen 130, the focus frame 410 is displayed around that region. The autofocus system 380 can then perform an autofocus procedure on the portion of the captured image represented by that region.

When a plurality of real objects are represented by displayed images within the focus frame 410, standard autofocus techniques might be used to determine which of the objects will be focused on. That is, an object represented by a central or dominant displayed image within the focus frame 410 might be automatically selected as the object that will be focused on.

In various implementations, the eye tracking system 390 associated with the secondary camera 320 can be used in conjunction with the autofocus system 380 associated with the primary camera 310 in various ways. In some cases, eye tracking could be activated before the autofocus system 380 is activated. For example, eye tracking might be activated when a facial recognition function provided by the secondary camera 320, the processor 360, and/or the eye tracking system 390 recognizes that a human face is looking toward the LCD screen 130. The photographer would not need to take any action to deliberately activate the eye tracking function but could merely look at a portion of the LCD screen 130 and thereby select that portion as a region of interest. That is, the secondary camera 320, the processor 360, and/or the eye tracking system 390 could analyze images produced by the secondary camera 320 to determine if the photographer is looking at the LCD screen 130 and, if so, where on the LCD screen 130 the photographer is looking. The photographer could then activate the autofocus system 380 by partially depressing the mechanical shutter button 140 or by touching the virtual shutter button 150. The autofocus system 380 would then perform an autofocus operation on the portion of a captured image that corresponds to the region of interest.

Alternatively, the eye tracking function might be activated upon activation of the autofocus system 380. That is, the secondary camera 320 might not perform eye tracking until the photographer first activates the autofocus system 380 by partially depressing the mechanical shutter button 140 or touching the virtual shutter button 150. The eye tracking function might remain active until the photographer captures a photograph or releases the shutter button 140 or 150.

In another alternative, the secondary camera 320, using the techniques described above, might fail to detect a human face or might determine that the photographer's gaze is not directed toward the LCD screen 130. In such cases, focusing of the primary camera 310 may be performed by the autofocus system 380 in the traditional manner without any input from the secondary camera 320. The device 100 may also provide the photographer with an option to manually revert to the traditional autofocus technique. The use of an automatic focusing system based on facial recognition and eye tracking as described herein may be one option among a set of options or profiles provided on the device 100.

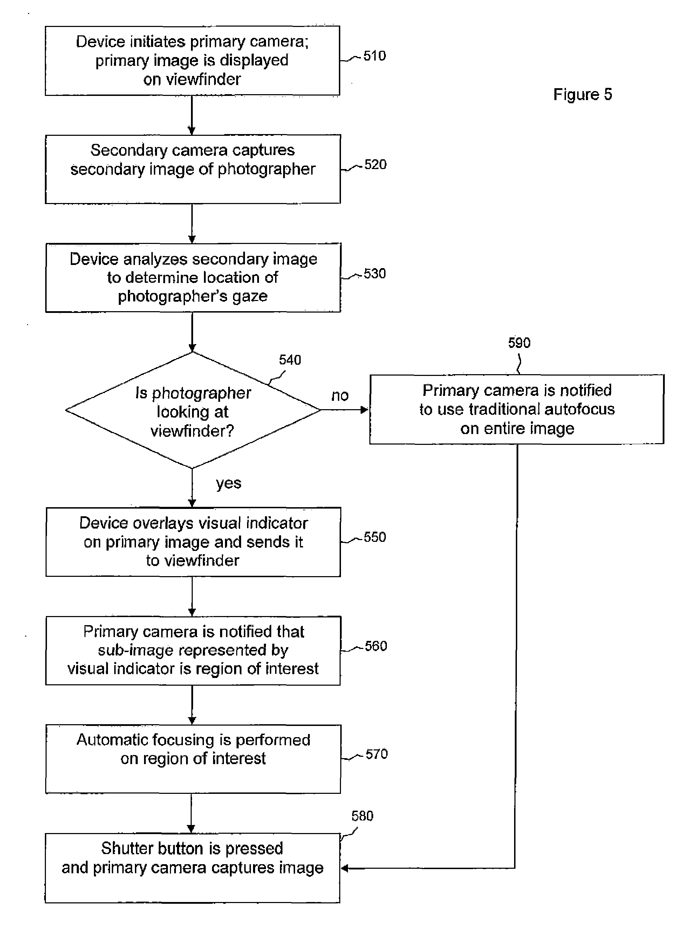

Figure 5 illustrates an implementation of a method for focusing a primary camera on a device that includes the primary camera and a secondary camera. At box 510, the device initiates the primary camera, and a primary image captured by the primary camera is displayed on a viewfinder on the device. At box 520, the secondary camera captures a secondary image of a photographer who is using the device. At box 530, the device analyzes the secondary image to determine the location of the photographer's gaze. At box 540, the device determines whether the photographer is looking at the viewfinder. If the photographer is looking at the viewfinder, then, at box 550, the device overlays on the primary image a visual indicator related to the location of the photographer's gaze within the viewfinder. The device then sends the primary image with the overlaid visual indicator to the viewfinder. At box 560, the primary camera is notified that the sub-image represented by the visual indicator is a region of interest. At box 570, automatic focusing is performed on the region of interest. At box 580, a shutter button on the device is pressed, and the primary camera captures an image. If it was determined at box 540 that the photographer is not looking at the viewfinder, then, at box 590, the primary camera is notified to use a traditional autofocus procedure on the entire captured image displayed in the entire viewfinder. At box 580, a shutter button on the device can then be pressed, and an image from the primary camera can be captured.

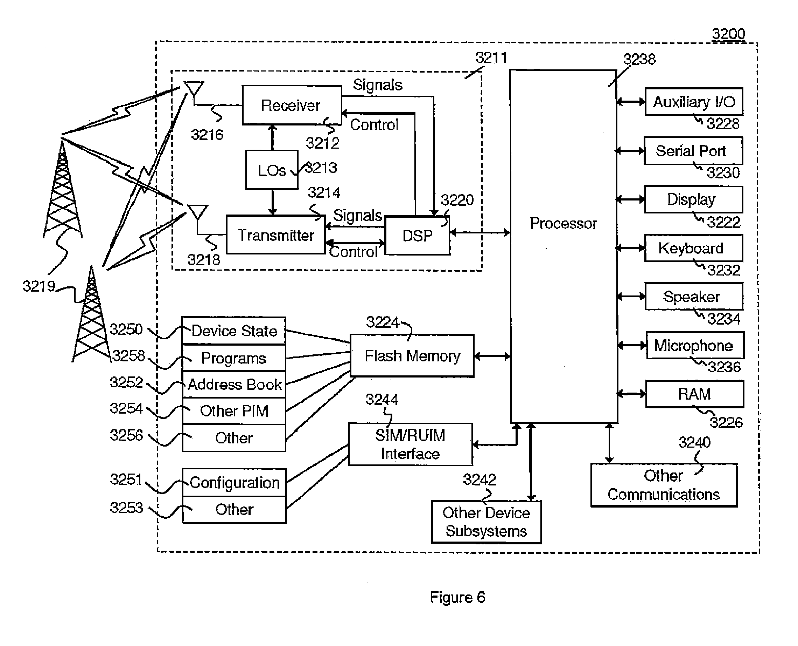

As mentioned above, the implementations described herein may be implemented by a smart phone or some other type of user equipment (UE). One exemplary device is described below with regard to Figure 6 and may be equivalent to the smart phone illustrated in Figure 2. UE 3200 is typically a two-way wireless communication device having voice and data communication capabilities. UE 3200 generally has the capability to communicate with other computer systems on the Internet. Depending on the exact functionality provided, the UE may be referred to as a data messaging device, a two-way pager, a wireless e-mail device, a cellular telephone with data messaging capabilities, a wireless Internet appliance, a wireless device, a mobile device, or a data communication device, as examples.

Where UE 3200 is enabled for two-way communication, it may incorporate a communication subsystem 3211, including a receiver 3212 and a transmitter 3214, as well as associated components such as one or more antenna elements 3216 and 3218, local oscillators (LOs) 3213, and a processing module such as a digital signal processor (DSP) 3220. As will be apparent to those skilled in the field of communications, the particular design of the communication subsystem 3211 will be dependent upon the communication network in which the device is intended to operate.

Network access requirements will also vary depending upon the type of network 3219. In some networks network access is associated with a subscriber or user of UE 3200. A UE may require a removable user identity module (RUIM) or a subscriber identity module (SIM) card in order to operate on a network. The SIM/RUIM interface 3244 is normally similar to a card-slot into which a SIM/RUIM card can be inserted and ejected. The SIM/RUIM card can have memory and hold many key configurations 3251, and other information 3253 such as identification, and subscriber related information.

When required network registration or activation procedures have been completed, UE 3200 may send and receive communication signals over the network 3219. As illustrated in Figure 6, network 3219 can consist of multiple base stations communicating with the UE.

Signals received by antenna 3216 through communication network 3219 are input to receiver 3212, which may perform such common receiver functions as signal amplification, frequency down conversion, filtering, channel selection and the like. Analog to digital (A/D) conversion of a received signal allows more complex communication functions such as demodulation and decoding to be performed in the DSP 3220. In a similar manner, signals to be transmitted are processed, including modulation and encoding for example, by DSP 3220 and input to transmitter 3214 for digital to analog (D/A) conversion, frequency up conversion, filtering, amplification and transmission over the communication network 3219 via antenna 3218. DSP 3220 not only processes communication signals, but also provides for receiver and transmitter control. For example, the gains applied to communication signals in receiver 3212 and transmitter 3214 may be adaptively controlled through automatic gain control algorithms implemented in DSP 3220.

UE 3200 generally includes a processor 3238 which controls the overall operation of the device. The processor 3238 of Figure 6 may be equivalent to the processor 360 of Figure 3. Communication functions, including data and voice communications, are performed through communication subsystem 3211. Processor 3238 also interacts with further device subsystems such as the display 3222, flash memory 3224, random access memory (RAM) 3226, auxiliary input/output (I/O) subsystems 3228, serial port 3230, one or more keyboards or keypads 3232, speaker 3234, microphone 3236, other communication subsystem 3240 such as a short-range communications subsystem and any other device subsystems generally designated as 3242. Serial port 3230 could include a USB port or other port known to those in the art.

Some of the subsystems shown in Figure 6 perform communication-related functions, whereas other subsystems may provide "resident" or on-device functions. Notably, some subsystems, such as keyboard 3232 and display 3222, for example, may be used for both communication-related functions, such as entering a text message for transmission over a communication network, and device-resident functions such as a calculator or task list.

Operating system software used by the processor 3238 may be stored in a persistent store such as flash memory 3224, which may instead be a read-only memory (ROM) or similar storage element (not shown). Those skilled in the art will appreciate that the operating system, specific device applications, or parts thereof, may be temporarily loaded into a volatile memory such as RAM 3226. Received communication signals may also be stored in RAM 3226.

As shown, flash memory 3224 can be segregated into different areas for both computer programs 3258 and program data storage 3250, 3252, 3254 and 3256. These different storage types indicate that each program can allocate a portion of flash memory 3224 for their own data storage requirements. Processor 3238, in addition to its operating system functions, may enable execution of software applications on the UE. A predetermined set of applications that control basic operations, including at least data and voice communication applications for example, will normally be installed on UE 3200 during manufacturing. Other applications could be installed subsequently or dynamically.

Applications and software may be stored on any computer readable storage medium. The computer readable storage medium may be a tangible or in transitory/non-transitory medium such as optical (e.g., CD, DVD, etc.), magnetic (e.g., tape) or other memory known in the art.

One software application may be a personal information manager (PIM) application having the ability to organize and manage data items relating to the user of the UE such as, but not limited to, e-mail, calendar events, voice mails, appointments, and task items. Naturally, one or more memory stores may be available on the UE to facilitate storage of PIM data items. Such PIM application may have the ability to send and receive data items, via the wireless network 3219. Further applications may also be loaded onto the UE 3200 through the network 3219, an auxiliary I/O subsystem 3228, serial port 3230, short-range communications subsystem 3240 or any other suitable subsystem 3242, and installed by a user in the RAM 3226 or a non-volatile store (not shown) for execution by the processor 3238. Such flexibility in application installation increases the functionality of the device and may provide enhanced on-device functions, communication-related functions, or both. For example, secure communication applications may enable electronic commerce functions and other such financial transactions to be performed using the UE 3200.

In a data communication mode, a received signal such as a text message or web page download will be processed by the communication subsystem 3211 and input to the processor 3238, which may further process the received signal for output to the display 3222, or alternatively to an auxiliary I/O device 3228.

A user of UE 3200 may also compose data items such as email messages for example, using the keyboard 3232, which may be a complete alphanumeric keyboard or telephone-type keypad, among others, in conjunction with the display 3222 and possibly an auxiliary I/O device 3228. Such composed items may then be transmitted over a communication network through the communication subsystem 3211.

For voice communications, overall operation of UE 3200 is similar, except that received signals may typically be output to a speaker 3234 and signals for transmission may be generated by a microphone 3236. Alternative voice or audio I/O subsystems, such as a voice message recording subsystem, may also be implemented on UE 3200. Although voice or audio signal output is preferably accomplished primarily through the speaker 3234, display 3222 may also be used to provide an indication of the identity of a calling party, the duration of a voice call, or other voice call related information for example.

Serial port 3230 in Figure 6 may normally be implemented in a personal digital assistant (PDA)-type UE for which synchronization with a user's desktop computer (not shown) may be desirable, but is an optional device component. Such a port 3230 may enable a user to set preferences through an external device or software application and may extend the capabilities of UE 3200 by providing for information or software downloads to UE 3200 other than through a wireless communication network. The alternate download path may for example be used to load an encryption key onto the device through a direct and thus reliable and trusted connection to thereby enable secure device communication. As will be appreciated by those skilled in the art, serial port 3230 can further be used to connect the UE to a computer to act as a modem.

Other communications subsystems 3240, such as a short-range communications subsystem, is a further optional component which may provide for communication between UE 3200 and different systems or devices, which need not necessarily be similar devices. For example, the subsystem 3240 may include an infrared device and associated circuits and components or a Bluetooth™ communication module to provide for communication with similarly enabled systems and devices. Subsystem 3240 may further include non-cellular communications such as WiFi or WiMAX.

In an implementation, a device is provided. The device comprises a primary camera to capture images, a secondary camera to capture images, a viewfinder, and a processor. The viewfinder can display images captured by the primary camera. The processor can provide eye tracking analysis on images captured by the secondary camera in order to determine a region of interest in the viewfinder. The processor further associates the region of interest with a portion of an image captured by the primary camera. The processor further initiates an autofocus procedure based on the region of interest.

In another implementation, a method for focusing a primary camera on a device is provided. The primary camera can capture images for display on a viewfinder of the device. The method comprises performing eye tracking analysis on images captured by a secondary camera on the device, selecting a region of interest within the viewfinder based on the eye tracking analysis, associating the region of interest with a portion of an image captured by the primary camera, and performing an autofocus procedure of the primary camera based on the region of interest.

In another implementation, a device is provided. The device comprises a primary camera, a secondary camera, and an eye tracking component. The eye tracking component is configured to detect the gaze of an eye on an electronic viewfinder on the device and is further configured to provide to the primary camera information related to a portion of the electronic viewfinder toward which the gaze is directed. The primary camera performs an autofocus procedure based on a portion of a captured image corresponding to the portion of the electronic viewfinder toward which the gaze is directed.

While several implementations have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various implementations as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A device, comprising:
a primary camera to capture images;
a secondary camera to capture images;
a viewfinder to display images captured by the primary camera; and
a processor to provide eye tracking analysis on images captured by the secondary
camera in order to determine a region of interest in the viewfinder, the processor further associating the region of interest with a portion of an image captured by the primary camera and initiating an autofocus procedure based on the region of interest.

2. A method for focusing a primary camera on a device, the primary camera capturing images for display on a viewfinder of the device, the method comprising:
performing eye tracking analysis on images captured by a secondary camera on the
device;
selecting a region of interest within the viewfinder based on the eye tracking
analysis;
associating the region of interest with a portion of an image captured by the primary
camera; and
performing an autofocus procedure of the primary camera based on the region of
interest.

3. The device of claim 1, wherein the viewfinder and a lens of the secondary camera are situated on the device in such a manner that focal planes of images captured by the secondary camera are substantially parallel to focal planes of images displayed on the viewfinder.

4. The device of claim 1 or the method of claim 2, wherein a visual indication is provided in the viewfinder to indicate the region of interest.

5. The device or method of claim 4, wherein a size and shape of the visual indication is at least one of:
fixed; and
manually adjustable.

6. The device or method of claim 4, wherein the visual indication moves based on results of the eye tracking analysis.

7. The device of claim 1 or the method of claim 2, wherein the eye tracking analysis is activated by a facial recognition analysis determining that a human face is looking toward the viewfinder.

8. The device of claim 1 or the method of claim 2, wherein the eye tracking analysis is activated by contact with a shutter button on the device.

9. The device of claim 1 or the method of claim 2, wherein focusing of the primary camera is performed without information from the secondary camera when a facial recognition analysis determines that a human face is not looking toward the viewfinder.

10. The device of claim 1 or the method of claim 2, wherein the device provides an option for selecting an autofocus procedure that does not use eye tracking analysis.

11. A device, comprising:
a primary camera;
a secondary camera; and
an eye tracking component configured to detect the gaze of an eye on an electronic
viewfinder on the device and further configured to provide to the primary camera information related to a portion of the electronic viewfinder toward which the gaze is directed, wherein the primary camera performs an autofocus procedure based on a portion of a captured image corresponding to the portion of the electronic viewfinder toward which the gaze is directed.

12. The device of claim 11, wherein a visual indication is provided in the electronic viewfinder to indicate the portion of the electronic viewfinder toward which the gaze is directed.

13. The device of claim 12, wherein a size and shape of the visual indication is at least one of:
fixed; and
manually adjustable.

14. The device of claim 12, wherein the visual indication moves in tandem with the gaze.

15. The device of claim 11, wherein the eye tracking component is activated by a facial recognition analysis recognizing that a human face is looking toward the electronic viewfinder.
